# EUROPÄISCHE PATENTANMELDUNG

(11) **EP 3 444 682 A1**
(43) Veröffentlichungstag der Anmeldung: **20.02.2019**
(21) Anmeldenummer: 17186422.6
(22) Anmeldetag: 16.08.2017
(51) Int. Cl.: G05B 19/042, G05B 19/05, G06F 9/455, G05B 19/418

(54) **VERFAHREN ZUM RECHNERGESTÜTZTEN KOPPELN EINES VERARBEITUNGSMODULS IN EIN MODULARES TECHNISCHES SYSTEM UND MODULARES TECHNISCHES SYSTEM**

(71) Anmelder: Siemens Aktiengesellschaft, 80333 München (DE)
(72) Erfinder: Graf, Rene, 90513 Zirndorf (DE)

(57) **Zusammenfassung**

Die Erfindung betrifft ein Verfahren zum rechnergestützten Koppeln eines Verarbeitungsmoduls in ein modulares technisches System (1). Das technische System (1) umfasst ein Host-System (20), das zur Bereitstellung zumindest einer echtzeitfähigen virtuellen Maschine (26-1) ausgebildet ist, und zumindest ein Verarbeitungsmodul (10-i). Dieses umfasst eine Hardwareeinheit (16) mit zumindest einem Sensor (17) und/oder einem Aktor (18) sowie eine Anschlusseinheit (11) mit einer Kommunikationskomponente (12) zur Ansteuerung der Hardwareeinheit (16) mittels Steuerbefehlen und einen Datenspeicher (13), in dem Konfigurationsdaten (KD) und ein Steuerprogramm (SP) zur Bereitstellung der Steuerbefehle gespeichert sind. Das zumindest eine Verarbeitungsmodul (10-i) ist über seine Anschlusseinheit (11) mit dem Host-System (20) zum Austausch von Datentelegrammen gekoppelt. Es werden folgende Schritte durchgeführt:
a1) Auslesen der Konfigurationsdaten (KD) und des Steuerprogramms (SP) aus dem Datenspeicher (13);
b1) Instanziieren einer virtuellen Maschine (26-1) auf dem Host-Rechner (20);
cl) Laden der Konfigurationsdaten (KD) und des Steuerprogramms (SP) in die virtuelle Maschine (26-1) auf dem Host-Rechner (20);
d1) Ausführen der virtuellen Maschine (26-1) zur Bereitstellung zumindest der Steuerbefehle und Übertragen der Steuerbefehle an das zumindest eine Verarbeitungsmodul (10-i) zur Ansteuerung der Hardwareeinheit (16).

## Beschreibung

Die Erfindung betrifft Verfahren zum rechnergestützten Koppeln und Abkoppeln eines Verarbeitungsmoduls in einem modularen technischen System. Die Erfindung betrifft ferner ein Computerprogrammprodukt sowie ein modulares technisches System.

Im Zuge der Konzentration und Zentralisierung der Datenverarbeitung werden viele Rechenprozesse auf Server vereint, wobei die Server wiederum in Serverfarmen von Datenverarbeitungszentren untergebracht werden. Dadurch wird die Wartung der einzelnen Server erheblich vereinfacht und das spezifische Knowhow an Ort und Stelle konzentriert.

Eine ähnliche Entwicklung besteht im Bereich der speicherprogrammierbaren Steuerungen (SPS). Diese Geräte dienen der Steuerung oder Regelung einer Maschine oder Anlage (allgemein: eines technischen Systems) und werden auf digitaler Basis programmiert. Um den üblichen Verdrahtungsaufwand zu minimieren, erfolgt die Verbindung von Sensoren und Aktoren mit einer SPS über einen Feldbus.

In jüngerer Vergangenheit wurden die Bussysteme in modernen Anlagen von Netzwerken abgelöst oder durch diese ergänzt. Gegenüber Bussystemen sind Netzwerke (z.B. Ethernet) flexibler einsetzbar und schneller bei der Datenübertragung. Eine hohe Zuverlässigkeit dieser Systeme im Zusammenhang mit speicherprogrammierbaren Steuerungen kann jedoch nur im Rahmen von Echtzeitsystemen realisiert werden. Ein Echtzeitsystem reagiert auf alle Ereignisse rechtzeitig und verarbeitet die Daten "schritthaltend" mit dem technischen Prozess. Bei einer Software, die Echtzeitbedingungen erfüllen soll, muss die maximale Laufzeit bestimmbar sein und darf keinen, nicht oder nur bedingt beeinflussbaren Faktoren unterliegen, mit anderen Worten: sie muss deterministisch sein. Die Ausführung eines Vorgangs innerhalb eines bestimmten Zeitintervalls wird als deterministisch bezeichnet.

Bei dem in der vorliegenden Erfindung betrachteten technischen System handelt es sich insgesamt um ein Echtzeitsystem, d.h. insbesondere, dass sowohl alle interagierenden Hardwareals auch Softwarekomponenten deterministisch reagieren.

Die aus dem Stand der Technik bekannte Virtualisierungstechnik (VT) dient im Wesentlichen der Aufteilung einer Hardware in kleinere Teile, z.B. eines Mehrkern-Prozessors, der mittels Virtualisierungstechnik in virtuelle Prozessoren mit nur einem oder wenigen Kernen zerteilt wird. Ebenso kann ein Arbeitsspeicher, der nur einmal physikalisch vorhanden ist, entsprechend geteilt werden, so dass jeder virtuelle Prozessor einen festen Anteil an dem Arbeitsspeicher zugeordnet bekommt. Diese Aufteilung kann statisch sein, aber auch dynamisch durchgeführt werden, d.h. eine Veränderung der Zuweisung während der Laufzeit kann zugelassen sein. Ähnliches gilt für die in einem Rechnersystem vorhandene Peripherie, wie Festplatten, Netzwerkanschlüsse und Ähnliches.

Das System oder Konglomerat aus virtuellen Prozessoren, anteiligen Speicher und zugeordneter Peripherie wird als virtuelle Maschine (VM) bezeichnet. Ein physikalischer Rechner mit entsprechenden Ressourcen kann somit quasi eine beliebige Anzahl an virtuellen Maschinen betreiben oder zur Verfügung stellen. Der physikalische Rechner selbst wird dabei als Host-Rechner bezeichnet. Während des Betreibens der virtuellen Maschinen muss der Host-Rechner oder kurz Host selbst aktiv werden, wenn nämlich eine Hardware in einer virtuellen Maschine kein physikalisches Gegenstück aufweist, sondern diese nur emuliert wird. Die Emulation echtzeitfähiger virtueller Netzwerkkarten auf einer Prozessorvorrichtung ist beispielsweise aus der WO 2013/064181 A1 bekannt.

Bei modularen technischen System, d.h. Anlagen oder Maschinen, ist Flexibilität von besonderer Bedeutung. Dies bedeutet, dass einzelne Module der Anlage oder Maschine auf einfache Weise entfernt oder an anderer Stelle angeordnet werden können, damit die gesamte Anlage oder Maschine einem aktuellen Produkt und dessen Produktionsprozess angepasst werden kann. Die Automatisierung solcher Anlagen oder Maschinen muss dieser Flexibilität grundsätzlich Rechnung tragen und kann daher nicht, wie dies in der Vergangenheit der Fall war, statisch aufgebaut sein. Ebenso sollen deren Steuerungen in Serverfarmen oder Server-Cluster realisiert werden.

Die Kombination dieser beiden, oben genannten, Anforderungen stellt an die Entwicklung der Anlagen oder Maschinen große Herausforderungen. Bislang werden speicherprogrammierbare Steuerungen, unabhängig davon, ob diese virtuell oder real vorgesehen sind, manuell erzeugt und mit dem der speicherprogrammierbaren Steuerung zugeordneten Modul, das Schnittstellen und Sensoren und/oder Aktoren umfasst, manuell verschaltet. Dies bringt den Nachteil mit sich, dass die Verschaltung fehleranfällig ist. Zum anderen ist bei dem Vorsehen der speicherprogrammierbaren Steuerung in Server-Clustern oder - farmen ein großes Wissen über die IT-Infrastruktur erforderlich.

Es ist Aufgabe der Erfindung, ein Verfahren anzugeben, mit dem ein Verarbeitungsmodul auf einfachere Weise in ein modulares technisches System integriert werden kann. Es ist ferner Aufgabe der Erfindung, ein entsprechendes modulares technisches System anzugeben, welches die einfachere Kopplung oder Abkopplung eines Verarbeitungsmoduls in das System ermöglicht.

Diese Aufgaben werden gelöst durch ein Verfahren gemäß den Merkmalen des Anspruchs 1, ein Verfahren gemäß den Merkmalen des Anspruchs 12, ein Computerprogrammprodukt gemäß den Merkmalen des Anspruchs 14 und ein modulares technisches System gemäß den Merkmalen des Anspruchs 15. Vorteilhafte Ausgestaltungen ergeben sich aus den abhängigen Patentansprüchen.

Gemäß einem ersten Aspekt schafft die Erfindung ein Verfahren zum rechnergestützten Koppeln eines Verarbeitungsmoduls in ein modulares technisches System. Das technische System umfasst ein Host-System, das zur Bereitstellung zumindest einer echtzeitfähigen virtuellen Maschine ausgebildet ist, und zumindest ein Verarbeitungsmodul. Das zumindest eine Verarbeitungsmodul umfasst eine Hardwareeinheit mit zumindest einem Sensor und/oder Aktor. Es umfasst weiter eine Anschlusseinheit mit einer Kommunikationskomponente zur Ansteuerung der Hardwareeinheit mittels Steuerbefehlen und einen Datenspeicher, in dem Konfigurationsdaten und ein Steuerprogramm zur Bereitstellung der Steuerbefehle gespeichert sind. Das zumindest eine Verarbeitungsmodul ist über seine Anschlusseinheit mit dem Host-System zum Austausch von Datentelegrammen gekoppelt.

Das Verfahren zum rechnergestützten Koppeln des Verarbeitungsmoduls umfasst die folgenden Schritte:
a1) Auslesen der Konfigurationsdaten und des Steuerprogramms aus dem Datenspeicher;
b1) Instanziieren einer virtuellen Maschine auf dem Host-Rechner;
c1) Laden der Konfigurationsdaten und des Steuerprogramms in die virtuelle Maschine auf dem Host-Rechner;
d1) Ausführen der virtuellen Maschine zur Bereitstellung zumindest der Steuerbefehle und Übertragen der Steuerbefehle an das zumindest eine Verarbeitungsmodul zur Ansteuerung der Hardwareeinheit.

Dieses Verfahren automatisiert die Erzeugung und die Verwaltung von virtuellen Steuerungen für modulare technische Systeme mit Hilfe von virtuellen Maschinen. Das Grundkonzept sieht dabei vor, dass die einzelnen Verarbeitungsmodule selbst keine speicherprogrammierbare Steuerung (sog. Programmable Logic Controller, PLC) mehr aufweisen, sondern mit einer externen Steuerung betrieben werden. Dazu bringen die oder auch nur manche Verarbeitungsmodule die notwendigen Informationen, welche in den Konfigurationsdaten und dem Steuerprogramm enthalten sind, mit. Die dynamische Erzeugung der den Verarbeitungsmodulen zugeordneten Steuerungen hat den Vorteil, dass sich die netzwerktechnische Einbindung in das modulare technische System automatisch realisieren lässt und das Verarbeitungsmodul über die netzwerktechnische Realisierung keinerlei Kenntnisse zu haben braucht. Dies wiederum erleichtert den Austausch einzelner Verarbeitungsmodule sowie eine flexible Anordnung innerhalb des technischen Systems.

Insbesondere in heterogenen modularen technischen Systemen reduziert sich der Aufwand zur Inbetriebnahme erheblich, wenn alle Verarbeitungsmodule, unabhängig von seinem Hersteller, auf die gleiche Steuerungsarchitektur aufsetzen.

In großen modularen technischen Systemen ist darüber hinaus eine verbesserte Fehlersicherheit gewährleistet. Dadurch können auch fehlersichere Steuerungen (F-PLCs) dynamisch instanziiert werden, die sowohl zu der ihr zugeordneten Hardwareeinheit als auch zu weiteren (fehlersicheren oder normalen) Steuerungen Kommunikationsverbindungen herstellen können.

Das Verfahren ermöglicht es darüber hinaus, Verarbeitungseinheiten ohne eigene Steuerung auszuliefern, da deren virtuelle Steuerungen zentral ausgeführt und verarbeitet werden können, wobei die Verarbeitungseinheiten vor Auslieferung "vorkonfigurierbar" sind.

Eine zweckmäßige Ausgestaltung des Verfahrens sieht vor, dass die Schritte des Auslesens (Schritt a1)), des Instanziierens (Schritt b1)) und des Ladens (Schritt c1)) durch eine auf dem Host-System aufgeführte Verwaltungsinstanz durchgeführt werden. Die Verwaltungsinstanz ist eine auf dem Host-System ausgeführte Software, welche die zentralen Schritte des rechnergestützten Koppelns eines jeweiligen Verwaltungsmoduls an das modulare technische System übernimmt. Dabei kann die Verwaltungsinstanz feststellen, ob ein neues Verarbeitungsmodul an das technische System angeschlossen wurde und an das technische System gekoppelt werden möchte. Zusätzlich ist die Verwaltungsinstanz in der Lage, festzustellen, ob das Verarbeitungsmodul eine Steuerung (PLC) umfasst oder lediglich eine Hardwareeinheit und daher die Steuerung mit Hilfe der virtuellen Maschine auf dem Host-Rechner realisiert werden muss. Die Verwaltungsinstanz ermöglicht es dadurch, das technische System in einem Mischbetrieb mit Verarbeitungsmodulen mit eigener und ohne eigene Steuerung (dies sind solche Verarbeitungsmodule, die über eine virtuelle Steuerung gesteuert werden) zu betreiben.

Eine weitere zweckmäßige Ausgestaltung sieht vor, dass der Schritt des Auslesens der Konfigurationsdaten und des Steuerprogramms (Schritt a1)) das Kopieren dieser in einen Speicher des Host-Systems umfasst, wobei das Kopieren insbesondere vor dem Instanziieren erfolgt. Hierdurch kann auf die Konfigurationsdaten und das Steuerprogramm auch zu einem späteren Zeitpunkt zugegriffen werden, wenn ein Zugriff auf den Datenspeicher nicht mehr ermöglicht ist.

Eine weitere Ausgestaltung sieht vor, dass die Verwaltungsinstanz nach dem Herstellen einer Verbindung des zumindest einen Verarbeitungsmoduls mit dem Host-System dem Verarbeitungsmodul eine Netzwerkadresse zuweist. Das Herstellen einer Verbindung des zumindest einen Verarbeitungsmoduls mit dem Host-System kann nachdem physikalischen Verbinden des zumindest einen Verarbeitungsmoduls an einen entsprechenden Anschluss des technischen Systems festgestellt werden, indem die Verarbeitungseinheit nach dem Anschließen mit Spannung versorgt wird, so dass die in dem Verarbeitungsmodul enthaltene Hardwareeinheit startet. Dadurch kann sich das Verarbeitungsmodul in dem Netzwerk aktiv melden, infolgedessen eine Netzwerkadresse an das Verarbeitungsmodul vergeben wird.

Zweckmäßigerweise tauscht die Verwaltungsinstanz die Datentelegramme nach dem Zuweisen der Netzwerkadresse mit einem auf Layer 4 des OSI-Referenzmodells laufenden Kommunikationsprotokoll aus. Dadurch ist eine Kommunikation zwischen der Verwaltungsinstanz und dem zumindest einem Verarbeitungsmodul möglich, um das Instanziieren einer virtuellen Maschine auf dem Host-Rechner vornehmen zu können. Als Kommunikationsprotokoll kann z.B. OPC-UA eingesetzt werden.

Eine weitere zweckmäßige Ausgestaltung sieht vor, dass die Verwaltungsinstanz überprüft, ob das zumindest eine Verarbeitungsmodul eine eigene Steuereinheit zur Ausführung des Steuerprogramms aufweist, wobei die Schritte der Instanziierung (Schritt b1)), des Ladens der Konfigurationsdaten und des Steuerprogramms (Schritt c1)) und des Ausführens der virtuellen Maschine (Schritt b1)) nur durchgeführt werden, wenn das Verarbeitungsmodul keine eigene Steuereinheit aufweist.

Wird im Rahmen der Kommunikation festgestellt, dass das an das technische System anzuschließende Verarbeitungsmodul über eine eigene (reale) Steuerung (PLC) verfügt, wird auf die eben genannten Schritte verzichtet.

Eine weitere zweckmäßige Ausgestaltung sieht vor, dass die Verwaltungsinstanz durch Auswertung der Konfigurationsdaten den Leistungsbedarf der virtuellen Maschine zur Ausführung des Steuerprogramms ermittelt und bereitstellt. Beispielsweise kann in diesem Schritt festgestellt werden, welche Leistungsfähigkeit der virtuellen Maschine für die Hardwareeinheit erforderlich oder zweckmäßig ist. Stehen verschiedene Leistungsstufen zur Verfügung, so kann die für das Verarbeitungsmodul am besten passende Leistungsstufe in der virtuellen Maschine instanziiert werden. Ebenso können Anforderungen, wie die Firmware-Version, der virtuellen Steuerung in der Konfiguration vorgegeben werden.

Eine weitere zweckmäßige Ausgestaltung sieht vor, dass für die virtuelle Maschine eine erste Netzwerkverbindung zumindest zu der Verwaltungsinstanz und eine zweite Netzwerkverbindung zu dem zugeordneten Verarbeitungsmodul angelegt werden. Die virtuelle Maschine hat zwei Netzwerk-Verbindungen, nämlich eine zur Verwaltungsinstanz sowie anderen (virtuellen oder realen) Steuerungen des technischen Systems und eine andere Schnittstelle zu den Hardwareeinheiten der zu steuernden Verarbeitungsmodule. Die erste Schnittstelle zur Verwaltungsinstanz wird, z.B. über DHCP oder ein anderes Protokoll, konfiguriert, so dass die virtuelle Maschine darüber angesprochen werden kann. Ein in dem technischen System vorhandener Netzwerk-Switch wird derart konfiguriert, dass eine Hardwareeinheit-Schnittstelle der virtuellen Maschine mit der Leitung zu dem Verarbeitungsmodul verbunden ist. Dabei können je nach Netzwerk Bandbreiten- oder Latenzanforderungen berücksichtigt werden. Mit anderen Worten erfolgt die Herstellung aller logischen Verbindungen über alle Netzwerkkomponenten des technischen Systems von der virtuellen Maschine bis zu dem zu steuernden Verarbeitungsmodul.

Eine weitere zweckmäßige Ausgestaltung sieht vor, dass das technische System ein Basis-System umfasst, das zumindest eine Anschlussschnittstelle mit zumindest einem Netzwerkanschluss und einem Versorgungsanschluss zur Kopplung mit dem zumindest einem Verarbeitungsmodul sowie ein Kopplungselement (Switch) zur Kopplung mit dem Host-System umfasst, wobei durch die Verwaltungsinstanz eine Herstellung einer logischen Verbindung über alle Netzwerkknoten auf einem Pfad zwischen der virtuellen Maschine und der Anschlusseinheit des Verarbeitungsmoduls durchgeführt wird.

Eine weitere zweckmäßige Ausgestaltung sieht vor, dass anstelle von Schritt a1) als Schritt a1) ein Image (Abbild) des Steuerprogramms von dem Datenspeicher des Host-Systems geladen und in Schritt c1) unverändert in die virtuelle Maschine geladen wird. Die Variation dieser Ausgestaltung besteht darin, dass in einem Datenspeicher nicht die Konfigurationsdaten und das Steuerprogramm der Steuerung liegen, sondern ein vollständiges Image der zu startenden virtuellen (echtzeitfähigen) Maschine. Dabei wird das aus dem Datenspeicher ausgelesene Image gestartet, wobei lediglich im Rahmen der Herstellung der Netzwerkkonfiguration sichergestellt werden muss, dass die virtuelle Maschine sowohl mit anderen logischen Komponenten, insbesondere des Basis-Systems, als auch der Hardwareeinheit des zu steuernden Verarbeitungsmoduls kommunizieren kann. Dies erlaubt es zum einen, dass die virtuelle Maschine exakt auf das Verarbeitungsmodul abgestimmt ist. Zum anderen können in einem vollständigen Image weitere Software-Komponenten außer der reinen Steuerung für das Verarbeitungsmodul enthalten sein, die parallel gestartet werden, z.B. für eine Visualisierung oder zum Zugriff auf eine Datenbank.

Mit Hilfe eines Images lassen sich komplexere Maschinensteuerung virtualisieren, insbesondere, wenn statt einem Image mehrere Images vorhanden sind, die parallel in jeweils eigenen virtuellen Maschinen gestartet werden (können).

Gemäß einer weiteren Ausgestaltung kann in Schritt b1) anstelle der virtuellen Maschine eine reale Steuerung instanziiert werden, wobei die Schritte c1) und d1) dann für die reale Steuerung durchgeführt werden.

Gemäß einem zweiten Aspekt schlägt die Erfindung ein Verfahren zum rechnergestützten Abkoppeln eines Verarbeitungsmoduls in einem modularen technischen System vor. Das technische System umfasst ein Host-System, das zur Bereitstellung zumindest einer echtzeitfähigen virtuellen Maschine ausgebildet ist, und zumindest ein Verarbeitungsmodul, das eine Hardwareeinheit mit zumindest einem Sensor und/oder Aktor sowie eine Anschlusseinheit mit einer Kommunikationskomponente zur Ansteuerung der Hardwareeinheit mittels Steuerbefehle und einem Datenspeicher, in dem Konfigurationsdaten und ein Steuerprogramm zur Bereitstellung der Steuerbefehle gespeichert sind, umfasst. Das zumindest eine Verarbeitungsmodul ist über seine Anschlusseinheit mit dem Host-System zum Austausch von Datentelegrammen gekoppelt.

Eine auf dem Host-System laufende Verwaltungsinstanz ist zur Durchführung folgender Schritte ausgebildet:
a2) Herbeiführen eines sicheren Zustands des zumindest einen Verarbeitungsmoduls;
b2) Beenden der dem zumindest einen Verarbeitungsmodul zugeordneten virtuellen Maschine und Entfernen von dem Host-System;
c2) Entfernen von gesetzten Netzwerkverbindungen;.
d2) Abkoppeln des zumindest einen Verarbeitungsmoduls.

Analog zum Koppeln kann auch das Abkoppeln eines Verarbeitungsmoduls automatisiert durchgeführt werden. Das Abkoppeln erfolgt in Reaktion auf eine Anfrage an die Verwaltungsinstanz, welche wahlweise von dem abzukoppelnden Verarbeitungsmodul oder von der Kommunikationskomponente selbst an die Verarbeitungsinstanz gesendet wird.

Gemäß einer zweckmäßigen Ausgestaltung wird in Schritt b2) eine reale Steuerung als frei markiert, wenn anstatt der virtuellen Maschine ein durch eine reale Steuerung gesteuertes Verarbeitungsmodul von dem technischen System abgekoppelt werden soll. Anschließend kann ein Urlöschen erfolgen, um für die nächste Verwendung in einem definierten Zustand zu sein.

Es wird ferner ein Computerprogrammprodukt vorgeschlagen, das direkt in den internen Speicher eines digitalen Rechners geladen werden kann und Softwarecodeabschnitte umfasst, mit denen die Schritte der hierin beschriebenen Verfahren durchgeführt werden, wenn das Produkt auf einem Rechner läuft. Das Computerprogrammprodukt kann in Gestalt einer CD-ROM, einer DVD, eines USB-Speichersticks und dergleichen verkörpert sein. Es kann auch als ein über ein (kontaktloses oder kontaktbehaftetes) Netzwerk ladbares Signal vorliegen.

Gemäß einem weiteren Aspekt umfasst die vorliegende Erfindung ein modulares technisches System. Dieses umfasst ein Host-System, das zur Bereitstellung einer echtzeitfähigen virtuellen Maschine ausgebildet ist, und zumindest ein Verarbeitungsmodul. Das zumindest eine Verarbeitungsmodul umfasst eine Hardwareeinheit mit zumindest einem Sensor und/oder einem Aktor sowie eine Anschlusseinheit mit einer Kommunikationskomponente zur Ansteuerung der Hardwareeinheit mittels Steuerbefehlen und einem Datenspeicher, in dem Konfigurationsdaten und ein Steuerprogramm zur Bereitstellung der Steuerbefehle gespeichert sind. Das zumindest eine Verarbeitungsmodul ist über eine Anschlusseinheit mit dem Host-System zum Austausch von Datentelegrammen gekoppelt.

Eine auf dem Host-System laufende Verwaltungsinstanz ist zur Durchführung folgender Schritte ausgebildet:
a1) Auslesen der Konfigurationsdaten und des Steuerprogramms aus dem Datenspeicher;
b1) Instanziieren einer virtuellen Maschine auf dem Host-Rechner;
c1) Laden der Konfigurationsdaten und des Steuerprogramms in die virtuelle Maschine auf dem Host-Rechner.

Das Host-System ist zur Durchführung des folgenden Schritts ausgebildet:
d1) Ausführen der virtuellen Maschine zur Bereitstellung zumindest der Steuerbefehle und Übertragen der Steuerbefehle an das zumindest eine Verarbeitungsmodul zur Ansteuerung der Hardwareeinheit.

Das erfindungsgemäße System weist die gleichen Vorteile auf, wie diese vorstehend in Verbindung mit dem erfindungsgemäßen Verfahren beschrieben wurden.

Gemäß einer zweckmäßigen Ausgestaltung umfasst das System ferner ein Basis-System, das zumindest eine Anschlussschnittstelle mit zumindest einem Netzwerkanschluss und einem Versorgungsanschluss zur Kopplung mit dem zumindest einen Verarbeitungsmodul sowie ein Kopplungselement (Switch) zur Kopplung mit dem Host-System umfasst, wobei die Verwaltungsinstanz dazu ausgebildet ist, eine logische Verbindung über einen Netzwerkknoten auf einem Pfad zwischen der virtuellen Maschine und der Anschlusseinheit des Verarbeitungsmoduls durchzuführen.

Gemäß einer weiteren zweckmäßigen Ausgestaltung ist die auf dem Host-System verlaufende Verwaltungsinstanz zur Durchführung folgender Schritte ausgebildet:
a2) Herbeiführen eines sicheren Zustands des zumindest einen Verarbeitungsmoduls;
b2) Beenden der dem zumindest einen Verarbeitungsmodul zugeordneten virtuellen Maschine und Entfernen von dem Host-System;
c2) Entfernen von gesetzten Netzwerkverbindungen.

Die Erfindung wird nachfolgend näher anhand eines Ausführungsbeispiels in der Zeichnung erläutert. Es zeigen:
- Fig. 1: eine schematische Darstellung eines Verarbeitungs-moduls eines erfindungsgemäßen modularen technischen Systems;
- Fig. 2: eine schematische Darstellung eines erfindungsgemäßen modularen technischen Systems, bestehend aus einem Host-System, einem Basis-System und einer Mehrzahl an erfindungsgemäßen Verarbeitungsmodulen gemäß einer ersten Ausgestaltungsvariante;
- Fig. 3: eine schematische Darstellung eines erfindungsgemäßen modularen technischen Systems, bei dem das Host-System als Server-Cluster ausgebildet ist; und
- Fig. 4: eine schematische Darstellung eines erfindungsgemäßen modularen technischen Systems, bei dem die Steuerungen durch reale Steuerungen des Host-Systems realisiert sind.

In der nachfolgenden Beschreibung werden Verfahren zum rechnergestützten Koppeln und Abkoppeln eines Verarbeitungsmoduls in einem modularen technischen System beschrieben. Dadurch können Verarbeitungsmodule in dem technischen System flexibel und einfach an- und umgeordnet werden, damit sich das technische System einem erforderlichen Produktionsprozess anpassen kann.

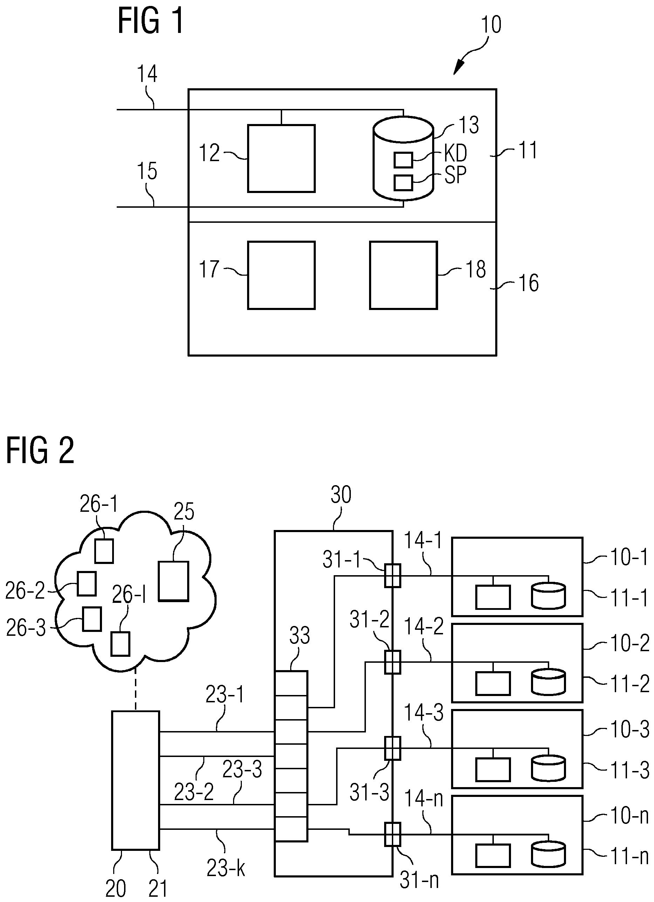

Fig. 1 zeigt in einer schematischen Darstellung den grundsätzlichen Aufbau eines dabei zum Einsatz kommenden Verarbeitungsmoduls 10. Das Verarbeitungsmodul 10 umfasst eine Anschlusseinheit 11 sowie eine Hardwareeinheit 16. Die Hardwareeinheit 16 umfasst beispielhaft zumindest einen Sensor 17 sowie zumindest einen Aktor 18. Darüber hinaus kann die Hardwareeinheit 16 beliebige elektrische und mechanische Komponenten umfassen. Die Hardwareeinheit 16 könnte alternativ auch lediglich zumindest einen Sensor 17 oder zumindest einen Aktor 18 umfassen.

Die Anschlusseinheit 11 umfasst eine Kommunikationskomponente 12 sowie einen Datenspeicher 13. Die Kommunikationskomponente 12 dient zur Ansteuerung der Hardwareeinheit 16 mittels Steuerbefehlen. In dem Datenspeicher 13 sind Konfigurationsdaten des Verarbeitungsmoduls 10 und ein Steuerprogramm SP zur Bereitstellung der Steuerbefehle für das Verarbeitungsmodul 10 gespeichert. Die Konfigurationsdaten KD und das Steuerprogramm SP werden vom Hersteller des Verarbeitungsmoduls 10 in dem Datenspeicher 13 hinterlegt.

Die Kommunikationskomponente 12 und der Datenspeicher 13 sind an einen Feldbus 14 angeschlossen. Als Feldbus 14 kann jeder Ethernet-basierte Feldbus, beispielsweise Profinet, verwendet werden. Optional ist der Datenspeicher 13 an eine weitere Netzwerkleitung 15, z.B. Ethernet, angeschlossen.

Über den Feldbus 14 werden die Kommunikationskomponente 12 und der Datenspeicher 13 an das technische System 1 angebunden (siehe Fig. 2 bis 4). Entgegen der zeichnerischen Darstellung könnten die Kommunikationskomponente 12 und der Datenspeicher 13 auch über voneinander getrennte Feldbusse oder Ethernet-basierte Busse an das technische System 1 angebunden sein. Über den Feldbus 14 werden im Betrieb des technischen Systems zeitkritische Daten zur Steuerung des Verarbeitungsmoduls 10 übertragen.

Die Kommunikationskomponente 12 ist z.B. als Wandler-Baugruppe ausgebildet, welche empfangene elektrische Signale in Kommunikationssignale zur Ansteuerung der Hardwareeinheit 16 umwandelt. Die Kommunikationskomponente 12 ist daher vorzugsweise in räumliche Nähe der Hardwareeinheit 16 angeordnet.

Fig. 2 zeigt eine schematische Darstellung eines erfindungsgemäßen technischen Systems 1 in einer Grundkonfiguration. Das modulare technische System 1 umfasst als Host-System 20 einen Server 21, ein Basis-System 30 sowie n Verarbeitungsmodule 10-i (i = 1...n). Jedes der Verarbeitungsmodule 10-i ist wie in Verbindung in Fig. 1 beschrieben, ausgebildet.

Das Basis-System 30 stellt die Infrastruktur für das technische System 1, wie z.B. Spannungen, Ströme, Netzwerkanschlüsse, Druckluft und dergleichen bereit. Das Basis-System 30 umfasst mehrere definierte (örtliche) Positionen, an denen sich die Verarbeitungsmodule 10-i andocken lassen. Diese Positionen sind jeweils mit Anschlussschnittstellen 31-i (i = 1...n) versehen, wobei jede der Anschlussschnittstellen 31-i mindestens einen Netzwerkanschluss und einen Versorgungsanschluss umfasst. Darüber hinaus können weitere Anschlüsse vorgesehen sein, welche entsprechend den Erfordernissen des betreffenden Verarbeitungsmoduls ausgebildet sind. Die genaue Ausgestaltung der Anschlussschnittstelle 31-i ist im vorliegenden Fall von untergeordneter Bedeutung, da diese für die Vernetzung der Steuerung mit den Verarbeitungsmodulen 10-i keine Rolle spielen.

Auf dem Host-System 20 lassen sich virtuelle Steuerungen 26-1 (l = 1...x, wobei x ≤ n ist) instanziieren. Des Weiteren umfasst das Host-System physikalische Netzwerkanschlüsse, so dass der Server 21 über eine entsprechende Anzahl an Verbindungsleitungen 23-k (k = 1-...o, wobei o ≥ n ist), an denen ein jeweiliges Verarbeitungsmodul 10-i über ein Kopplungselement 33, z.B. einen Switch, an das Host-System 20 angeschlossen werden kann. Es ist zweckmäßig, wenn das Kopplungselement 33 Bestandteil des Basis-Systems 30 ist, wobei dies jedoch nicht zwingend ist. Das konfigurierbare Kopplungselement 33 stellt die notwendige Flexibilität sicher, wobei das Kopplungselement 33 reell oder optional virtuell ausgebildet sein kann. Eine Ausbildung als virtuelles Kopplungselement ist beispielsweise der WO 2013/064181 A1 der Anmelderin entnehmbar.

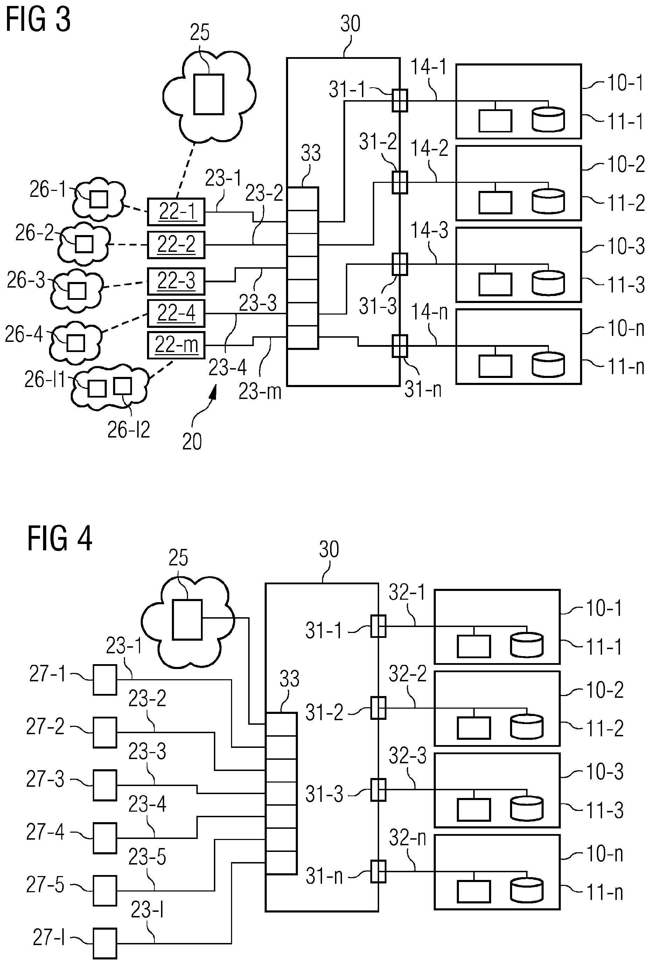

In dem Host-System 20 läuft eine Verwaltungsinstanz 25, mit deren Hilfe die virtuellen Steuerungen 26-1 instanziiert und verwaltet werden. Die Verwaltungsinstanz 25 ist dazu eingerichtet, festzustellen, ob ein neues Verarbeitungsmodul 10-i an eine der Anschlussschnittstellen 31-i des Basis-Systems 30 angeschlossen und eingeschaltet wurde. Die Verwaltungsinstanz 25 stellt darüber hinaus fest, ob das Verarbeitungsmodul 10-i eine physikalische Steuerung umfasst oder lediglich die eingangs erwähnte Anschlusseinheit 11 und die Hardwareeinheit 16. Im letzteren Fall, wie dies nachfolgend näher beschrieben werden wird, wird eine virtuelle Maschine zur Steuerung des Verarbeitungsmoduls 10-i erzeugt. Andernfalls wird eine reale Steuerung zur Steuerung des Verarbeitungsmoduls genutzt (siehe Fig. 4), so dass im technischen System insgesamt ein Mischbetrieb von Modulen mit und ohne Steuerung möglich ist.

Das technische System 1 kann sehr heterogen aufgebaut sein, so dass bevorzugt ein übergreifendes Kommunikationsprotokoll, wie z.B. OPC-UA zum Einsatz kommt, um zwischen dem Verarbeitungsmodul 10-i und dem Basis-System 30 sowie dem Host-System 20 koordiniert Daten austauschen können. Im Weiteren wird beispielhaft auf OPC-UA als Protokoll Bezug genommen. Zur Realisierung der nachfolgend beschriebenen Verfahren können jedoch auch andere Protokolle verwendet werden. Wird ein Verarbeitungsmodul 10-i an das Basis-System 30 angeschlossen, so bekommt das Verarbeitungsmodul 10-i eine Netzwerkadresse zugewiesen, mittels derer die Verwaltungsinstanz 25 das Verarbeitungsmodul 10-i anspricht. Im Rahmen dieser Kommunikation wird festgestellt, ob sich beispielsweise ein OPC-UA-Server des Verarbeitungsmoduls 10-i meldet. Ist dies nicht der Fall, so ist keine Steuerung für das Verarbeitungsmodul 10-i in diesem vorhanden, so dass mit den nachfolgend beschriebenen Verfahren eine virtuelle Steuerung erzeugt wird.

Ohne Beschränkung der Allgemeinheit wird bei der nachfolgenden Beschreibung des Verfahrens davon ausgegangen, dass sich der Datenspeicher 13 eines neu angeschlossenen Verarbeitungsmoduls 10-i nicht auf den gewählten Kommunikationsprotokoll (z.B. OPC-UA) meldet, sondern in einem zuvor in dem technische System 1 festgelegten Format die Konfigurationsdaten KD und das Steuerprogramm SP der zu erzeugenden Steuerung anbietet.

Der Ablauf der rechnergestützten Kopplung ist wie folgt:
1. Physikalisches Andocken: Das Verarbeitungsmodul 10-i wird mechanisch an die zugeordnete Anschlussschnittstelle 31-i angeschlossen, so dass das Verarbeitungsmodul 10-i die für die Produktion relevanten Arbeitsschritte ausführen kann. Insbesondere erfolgt mit Hilfe einer Leitung für den Feldbus 14-i ein Anschluss an einen Netzwerkanschluss der Anschlussschnittstelle 31-i. Gleichzeitig wird das an das technische System 1 zu koppelnde Verarbeitungsmodul 10-i mit Spannung versorgt, so dass sämtliche Komponenten des anzukoppelnden Verarbeitungsmoduls 10-i hochfahren.
2. Netzwerkeinbindung: Eine Recheneinheit des Datenspeichers 13 des anzukoppelnden Verarbeitungsmodul 10-i meldet sich aktiv, um die Zuweisung einer Netzwerkadresse (IP-Adresse) anzustoßen. Dies erfolgt typischerweise mittels des Protokolls DHCP, kann jedoch auch auf andere Weise realisiert werden, sofern eine entsprechende Definition zwischen dem Host-System 20 und dem anzuschließenden Verarbeitungsmodul 10-i definiert ist. In dem Server 21 des Host-Systems 20 läuft ein DHCP-Server, der für alle Netzwerkanschlüsse der Anschlussschnittstellen 31-i zuständig ist, welche gegenwärtig nicht durch ein Verarbeitungsmoduls 10-i belegt sind.
3. Bedarfsidentifikation: Die Verwaltungsinstanz 25 in dem Server 21 stellt fest, dass ein neues Verarbeitungsmodul 10-i an das Basis-System 30 angeschlossen wurde. Die Verwaltungsinstanz fragt, z.B. per OPC-UA, das Verwaltungsmodul 10-i, ob es über eine eigene Steuerung (PLC) verfügt. Aus dem Ausbleiben einer Antwort oder einer dezidierten Antwort, dass dies nicht der Fall ist, wird die dynamische Instanziierung gestartet. Die Bedarfsidentifikation und die während der weiteren nachfolgenden Schritte erfolgende Kommunikation findet auf Layer 4 des OSI-Referenzmodels statt.
4. Datensicherung: In diesem Schritt werden die Konfigurationsdaten KD und das Steuerprogramm SP des Datenspeichers 13 auf einem dem Server 21 zugänglichen Speicher (nicht dargestellt) kopiert. Dies erfolgt, da der Datenspeicher 13 nach der Konfiguration der virtuellen Maschinen über den Feldbus 14-i unter Umständen nicht mehr erreichbar ist, insbesondere wenn keine optionale Netzwerkleitung 15 zu dem Datenspeicher 13 vorgesehen ist. Mit Hilfe der Konfigurationsdaten KD und des Steuerprogramms SP kann die virtuelle Maschine anschließend ohne direkten Zugriff auf den Datenspeicher 13 des anzukoppelnden Verarbeitungsmoduls 10-i konfiguriert und mit der virtuellen Steuerung (virtuelle PLC) versehen werden.
5. Virtuelle Steuerung: Die Verwaltungsinstanz, die auf dem Server 21 abläuft, startet eine neue Instanz einer virtuellen Maschine 26-1 in dem Host-System 20, wobei dies auf einem beliebigen Rechenknoten oder Rechenkern des Host-Systems 20 erfolgen kann. Die virtuelle Maschine 26-1 verfügt zunächst weder über eine Konfiguration noch über ein Programm. Anhand der Konfigurationsdaten KD kann festgestellt werden, welchen Leistungsbedarf das anzukoppelnde Verarbeitungsmodul 10-i benötigt. Stehen verschiedene Leistungsstufen für virtuelle Maschinen zur Verfügung, so kann die passende virtuelle Maschine 26-1 instanziiert werden. Ebenso können weitere Anforderungen, wie beispielsweise die Firmware-Version, der virtuellen Maschine 26-1 in der Konfiguration der Konfigurationsdaten KD vorgegeben sein.
   Die virtuelle Maschine (welche gleichsam eine PLC - Programmable Logic Controller darstellt) besitzt zwei Netzwerk-Verbindungen. Eine erste Netzwerkverbindung besteht zur Verwaltungsinstanz 25 sowie den anderen virtuellen Maschinen 26-1 des technischen Systems 1. Eine andere Netzwerkverbindung besteht zu dem anzukoppelnden Verarbeitungsmodul 10-i. Die Verwaltungsinstanz 25 wird, z.B. über DHCP oder ein anderes Protokoll, derart konfiguriert, dass die virtuelle Maschine 26-1 über die Netzwerkverbindung angesprochen werden kann.
6. Netzwerkkonfiguration: Als nächstes wird das Kopplungselement 33 des Basis-Systems 30 konfiguriert, so dass die Netzwerkschnittstelle der virtuellen Maschine 26-1 mit der zugeordneten Leitung 23-k verbunden ist. Dabei können, je nach Ausgestaltung der Netzwerktopologie, auch Bandbreiten- oder Latenzanforderungen berücksichtigt werden. In diesem Schritt kann die Verbindung zu dem Datenspeicher 13 des anzukoppelnden Verarbeitungsmoduls 10-i verloren gehen. Da dessen Daten KD und SP vorab auf einen für den Server 21 zugänglichen Speicher kopiert wurden, ist dies jedoch ohne Belang.
   Im Rahmen der Netzwerkkonfiguration werden somit alle logischen Verbindungen über alle Netzwerkkomponenten in der Kette zwischen der virtuellen Maschine und dem anzukoppelnden Verarbeitungsmodul 10-i hergestellt.
7. Laden der virtuellen Steuerung: Die Verwaltungsinstanz 25 lädt nun sowohl die Konfigurationsdaten KD als auch das Steuerprogramm SP in die virtuelle Maschine 26-1 und startet diese, so dass die Kommunikationskomponente 12 aktiv wird und das Verarbeitungsmodul 10-i die Produktion aufnehmen kann. Außerdem kann die virtuelle Maschine 26-1 über die Anlagen-Netzwerkschnittstelle mit den anderen Verarbeitungsmodulen 10-i oder dem Basis-System 30 kommunizieren, so dass dem Verarbeitungsmodul Produktionsaufträge oder Ähnliches übermittelt werden können.

Dieser grundlegende Ablauf, der die Schritte 1 bis 7 umfasst, kann mit Hilfe der nachfolgenden Optionen variiert werden. Alternativ zu den Konfigurationsdaten KD und dem Steuerprogramm SP in dem Datenspeicher 13 des anzukoppelnden Verarbeitungsmoduls 10-i kann in dem Datenspeicher 13 ein vollständiges Image (Abbild) der zu startenden virtuellen (echtzeitfähigen) Maschine gespeichert sein. Dies kann beispielsweise in Schritt 3 des vorstehend beschriebenen Verfahrens überprüft werden. Damit wird in Schritt 5 das in einen Speicher des Servers 21 kopierte Image gestartet. Schritt 7 kann entfallen, wobei die Netzwerkkonfiguration dennoch sicherstellen muss, dass die virtuelle Steuerung sowohl mit dem Basis-System 30 als auch mit der Kommunikationskomponente 12 des anzuschließenden Verarbeitungsmoduls 10-i kommunizieren kann.

Diese Abwandlung erlaubt zum einen, dass die virtuelle Maschine, die eine virtuelle Steuerung ermöglicht, exakt auf das Verarbeitungsmodul 10-i abgestimmt ist. Ein Problem, bei dem der Server 21 eine aus einem verfügbaren Pool verfügbare Steuerung für die virtuelle Maschine annimmt, kann dadurch umgangen werden. Zum anderen können in einem vollständigen Image weitere Software-Komponenten neben dem reinen Steuerprogramm vorgesehen sein, die parallel gestartet werden können. Dies können beispielsweise eine Visualisierung oder eine Datenbank betreffen.

Insgesamt lassen sich mit dieser Abwandlung komplexe Maschinensteuerungen virtualisieren. Insbesondere ist es auch möglich, nicht nur ein Image, sondern mehrere Images in dem Datenspeicher 13 des anzukoppelnden Verarbeitungsmoduls 10-i zu hinterlegen.

Die Fig. 3 und 4 zeigen geringfügige Abwandlungen des in Fig. 2 gezeigten technischen Systems. In der Ausführungsvariante gemäß Fig. 3 umfasst das Host-System 20 ein Server-Cluster 22 mit einer Anzahl j von Servern 22-j (j = 1...m). Die prinzipielle Funktionsweise ist identisch, wobei einzelne virtuelle Steuerungen 26-1 jeweiligen Servern 22-j des Server-Clusters 22 zugeordnet sind. Ein Server-Cluster kann in der Summe aus genauso vielen Kernen bestehen, wie der in Fig. 2 illustrierte Server 21.

Im Wesentlichen kann sich aufgrund der höheren Anzahl an Servern auch die Anzahl der Netzwertkomponenten erhöhen, so dass die automatische Netzwerkkonfiguration eine größere Information über alle Komponenten benötigt. Auf die explizite Darstellung der additiven Netzwerkkomponenten wurde der Einfachheit halber in Fig. 3 verzichtet, da deren genaue Konfiguration von dem spezifischen Ausbau des Server-Clusters 22 abhängt. Ein Vorteil der Verwendung eines Server-Clusters 22 besteht in einer erhöhten Ausfallsicherheit wegen dem Vorhandensein von Redundanzen.

Das in Verbindung in Fig. 2 beschriebene Szenario lässt sich auch mit realen Steuerungen 27-1 (l = 1...x) realisieren, welche die virtuellen Steuerungen aus den Ausführungsvarianten der Fig. 2 und 3 ersetzen. Dabei sind auch Mischformen möglich. Das in Fig. 4 gezeigte technische System arbeitet zwar auch dynamisch, wobei das Kopplungselement 33 real ausgebildet ist. Zusätzlich zu den Steuerungen in den realen Steuerungen 27-1 läuft in dem Netzwerk, z.B. auf einem gesonderten Rechner, die Verwaltungsinstanz 25. Der Ablauf entspricht im Wesentlichen den vorher beschriebenen, mit Ausnahme, dass keine virtuelle Steuerung gestartet, sondern eine reale Steuerung ausgewählt wird, die bislang noch kein Steuerprogramm bearbeitet hat. Diese wird anschließend mit den in dem Verarbeitungsmodul hinterlegten Konfigurationsdaten KD und dem Steuerprogramm SP geladen und gestartet.

Eine weitere Alternative betrifft eine Konfiguration zur Laufzeit. Für die Abarbeitung eines Steuerprogramms und die Kommunikation mit der Kommunikationskomponente des anzukoppelnden Verarbeitungsmoduls 10-i muss nicht zwangsweise eine eigene virtuelle Steuerung für jedes einzelne Verarbeitungsmodul instanziiert werden. Steuerungen haben häufig ein Merkmal namens CiR ("Configuration in Run"), welches es erlaubt, im laufenden Betrieb einer Steuerung eine additive Konfiguration weiterer Baugruppen vorzunehmen als auch zusätzliche Programmteile, die mit den Daten dieser neuen Baugruppen arbeiten, zu laden. Diese Erweiterungen können im laufenden Betrieb auch aus dem Steuerprogramm entfernt werden. Für die Verwendung in einer CiR-Anwendung können die Daten des Steuerprogramms speziell aufbereitet werden. Dann kann die Anzahl der Steuerungen reduziert werden. Bei dieser Ausgestaltung muss in der Netzwerkkonfiguration im Schritt 6 sichergestellt werden, dass das anzukoppelnde Verarbeitungsmodul mit dem bereits vorhandenen Kommunikationsnetz der benutzten virtuellen Maschinen verbunden wird.

Im Weiteren wird das Verfahren zum Abkoppeln eines Verarbeitungsmoduls 10-i beschrieben. Zum Abkoppeln wird ein Abkoppel-Request an die Verwaltungsinstanz 25 übertragen. Der Abkoppel-Request kann entweder von dem abzukoppelnden Verarbeitungsmodul oder von dem Basis-System 30 übertragen werden. Der weitere Ablauf ist wie folgt:
1. Verarbeitungsmodul informieren: Über ein für die Basis-Anlage zuvor festgelegtes Protokoll, z.B. OPC-UA, wird dem Verarbeitungsmodul bzw. dessen virtueller Steuerung 26-l, mitgeteilt, dass das Verarbeitungsmodul 10-i von dem Basis-System 30 getrennt werden soll.
2. Verarbeitungsmodul herunterfahren: Die virtuelle Steuerung fährt das Verarbeitungsmodul 10-i in einen sicheren Zustand und meldet dies an die Verwaltungsinstanz 25. Wahlweise schaltet sich die Steuerung einer virtuellen Maschine selbst in einen Stopp-Zustand. Alternativ kann dies durch die Verwaltungsinstanz veranlasst werden. Kommt das Merkmal CiR zum Einsatz, kann die Steuerung einer virtuellen Maschine auch weitere Verarbeitungsmodule kontrollieren und darf daher nicht in den Stopp-Zustand übergehen. Stattdessen entlädt die Verwaltungsinstanz 25 nicht mehr aktive Teile der Konfigurationsdaten KD und des Steuerprogramms SP aus der Steuerung der virtuellen Maschine 26-l, während die anderen Teile weiter laufen.
3. Steuerung deaktivieren: Im Falle einer virtuellen Steuerung werden diese heruntergefahren und anschließend die virtuellen Maschinen 26-1 aus dem Server 21 entfernt.
   Werden, wie dies nachfolgend beschrieben wird, reale Steuerungen eingesetzt, so werden diese in der Verwaltungsinstanz 25 als frei markiert und anschließend urgelöscht, um für die nächste Verwendung in einem definierten Zustand zu sein. Ebenso ist es möglich, die virtuellen Steuerungen nicht herunterzufahren, sondern nur urzulöschen, damit sie später für ein anderes Modul wiederverwendet werden können.
4. Netzwerk zurücksetzen: Gesetzte Netzwerkverbindungen zu dem abzukoppelnden Verarbeitungsmodul 10-i werden entfernt und der Port direkt mit der Verwaltungsinstanz 25 verbunden, so dass er für ein neues Verarbeitungsmodul wieder benutzbar wird.
5. Modul ausschalten: Die Spannungsversorgung des abzukoppelnden Verarbeitungsmoduls 10-i wird getrennt, wodurch das Verarbeitungsmodul anschließend von der Anschlussschnittstelle 31-i des Basis-Systems 30 entfernt werden kann.

Das Verfahren ermöglicht eine automatische Instanziierung virtueller Steuerungen und der Verschaltung der Netzwerke, was bisher manuell durchgeführt wurde. Dadurch wird das Szenario CaaS (Control as a Service) ermöglicht, bei dem Automatisierungsrechenleistung dynamisch bereitstellbar ist. In dem Szenario CaaS kann ein Maschinen- oder Anlagenbauer seine Verarbeitungsmodule ohne eigene Steuerung ausliefern bzw. einen ähnlichen Server oder Server-Cluster für virtuelle Steuerungen bei sich betreiben, um so seine Verarbeitungsmodule vor Auslieferung in Betrieb zu setzen. Damit wird die Äquivalenz der Steuerungen beim Maschinenhersteller und beim Betreiber des technischen Systems erhöht oder vollständig identisch, so dass ein Abnahmetest beim Betreiber des technischen Systems zu identischen Ergebnissen führt, obwohl die Steuerung eine andere ist.

## Patentansprüche

1. Verfahren zum rechnergestützten Koppeln eines Verarbeitungsmoduls in ein modulares technisches System (1), wobei das technische System (1) umfasst:
- ein Host-System (20), das zur Bereitstellung zumindest einer echtzeitfähigen virtuellen Maschine (26-1) ausgebildet ist; und
- zumindest ein Verarbeitungsmodul (10-i), das eine Hardwareeinheit (16) mit zumindest einem Sensor (17) und/oder einem Aktor (18) sowie eine Anschlusseinheit (11) mit einer Kommunikationskomponente (12) zur Ansteuerung der Hardwareeinheit (16) mittels Steuerbefehlen und einem Datenspeicher (13), in dem Konfigurationsdaten (KD) und ein Steuerprogramm (SP) zur Bereitstellung der Steuerbefehle gespeichert sind, umfasst, wobei das zumindest eine Verarbeitungsmodul (10-i) über seine Anschlusseinheit (11) mit dem Host-System (20) zum Austausch von Datentelegrammen gekoppelt ist;
mit den Schritten:
a1) Auslesen der Konfigurationsdaten (KD) und des Steuerprogramms (SP) aus dem Datenspeicher (13);
b1) Instanziieren einer virtuellen Maschine (26-1) auf dem Host-Rechner (20);
c1) Laden der Konfigurationsdaten (KD) und des Steuerprogramms (SP) in die virtuelle Maschine (26-1) auf dem Host-Rechner (20);
d1) Ausführen der virtuellen Maschine (26-1) zur Bereitstellung zumindest der Steuerbefehle und Übertragen der Steuerbefehle an das zumindest eine Verarbeitungsmodul (10-i) zur Ansteuerung der Hardwareeinheit (16).

2. Verfahren nach Anspruch 1, bei dem die Schritte des Auslesens, des Instanziierens und des Ladens durch eine auf dem Host-System (20) ausgeführte Verwaltungsinstanz (25) durchgeführt werden.

3. Verfahren nach Anspruch 1 oder 2, bei dem der Schritt des Auslesens der Konfigurationsdaten (KD) und des Steuerprogramms (SP) das Kopieren dieser in einen Speicher des Host-Systems (20) umfasst, wobei das Kopieren insbesondere vor dem Instanziieren erfolgt.

4. Verfahren nach einem der vorhergehenden Ansprüche, bei dem die Verwaltungsinstanz (25) nach dem Herstellen einer Verbindung des zumindest einen Verarbeitungsmoduls (10-i) mit dem Host-System (20) dem Verarbeitungsmodul (10-i) eine Netzwerkadresse zuweist.

5. Verfahren nach Anspruch 4, bei dem die Verwaltungsinstanz (25) die Datentelegramme nach dem Zuweisen der Netzwerkadresse mit einem auf Layer 4 des OSI-Referenzmodells laufenden Kommunikationsprotokoll austauscht.

6. Verfahren nach einem der vorhergehenden Ansprüche, bei dem die Verwaltungsinstanz überprüft, ob das zumindest eine Verarbeitungsmodul (10-i) eine eigene Steuereinheit zur Ausführung des Steuerprogramms (SP) aufweist, wobei die Schritte der Instanziierung, des Ladens und des Ausführens nur durchgeführt werden, wenn das Verarbeitungsmodul (10-i) keine eigene Steuereinheit aufweist.

7. Verfahren nach einem der vorhergehenden Ansprüche, bei dem die Verwaltungsinstanz (25) durch Auswertung der Konfigurationsdaten (KD) den Leistungsbedarf der virtuellen Maschine (26-1) zur Ausführung des Steuerprogramms (SP) ermittelt und bereitstellt.

8. Verfahren nach einem der vorhergehenden Ansprüche, bei dem für die virtuelle Maschine (26-1) eine erste Netzwerkverbindung zu der Verwaltungsinstanz (25) und eine zweite Netzwerkverbindung zu dem zugeordneten Verarbeitungsmodul (10-i) angelegt werden.

9. Verfahren nach einem der vorhergehenden Ansprüche, bei dem das technische System (1) ein Basis-System (30) umfasst, das zumindest eine Anschlussschnittstelle mit zumindest einem Netzwerkanschluss und einem Versorgungsanschluss (31-i) zur Kopplung mit dem zumindest einen Verarbeitungsmodul (10-i) sowie ein Kopplungselement(33) zur Kopplung mit dem Host-System (20) umfasst, wobei durch die Verwaltungsinstanz (25) eine Herstellung einer logischen Verbindung über alle Netzwerkknoten auf einem Pfad zwischen der virtuellen Maschine (26-1) und der Anschlusseinheit (11) des Verarbeitungsmoduls (10-i) durchgeführt wird.

10. Verfahren nach einem der vorhergehenden Ansprüche, bei dem anstelle von Schritt a1) als Schritt a1) ein Image des Steuerprogramms von dem Datenspeicher (13) des Host-System (20) geladen und in Schritt c1) unverändert in die virtuelle Maschine (26-1) geladen wird.

11. Verfahren nach einem der vorhergehenden Ansprüche, bei dem in Schritt b1) anstelle der virtuellen Maschine (26-1) eine reale Steuerung (27-1) instanziiert wird, wobei die Schritte c1) und d1) für die reale Steuerung (27-1) durchgeführt werden.

12. Verfahren zum rechnergestützten Abkoppeln eines Verarbeitungsmoduls (10-i) in ein modulares technisches System (1), wobei das technische System (1) umfasst:
- ein Host-System (20), das zur Bereitstellung zumindest einer echtzeitfähigen virtuellen Maschine (26-1) ausgebildet ist; und
- zumindest ein Verarbeitungsmodul (10-i), das eine Hardwareeinheit (16) mit zumindest einem Sensor (17) und/oder einem Aktor (18) sowie eine Anschlusseinheit (11) mit einer Kommunikationskomponente (12) zur Ansteuerung der Hardwareeinheit (16) mittels Steuerbefehlen und einem Datenspeicher, in dem Konfigurationsdaten (KD) und ein Steuerprogramm (SP) zur Bereitstellung der Steuerbefehle gespeichert sind, umfasst, wobei das zumindest eine Verarbeitungsmodul (10-i) über seine Anschlusseinheit (11) mit dem Host-System (20) zum Austausch von Datentelegrammen gekoppelt ist;
mit den Schritten:
a2) Herbeiführen eines sicheren Zustands des zumindest einen Verarbeitungsmoduls (10-i);
b2) Beenden der dem zumindest einen Verarbeitungsmodul (10-i) zugeordneten virtuellen Maschine (26-1) und Entfernen von dem Host-System (20);
c2) Entfernen von gesetzten Netzwerkverbindungen;
d2) Abkoppeln des zumindest einen Verarbeitungsmoduls (10-i) .

13. Verfahren nach Anspruch 12, bei dem in Schritt b2) eine reale Steuerung als frei markiert wird, wenn anstatt der virtuellen Maschine (26-1) ein durch eine reale Steuerung (27-1) gesteuertes Verarbeitungsmodul (10-i) von dem technischen System (1) abgekoppelt werden soll.

14. Computerprogrammprodukt, das direkt in den internen Speicher eines digitalen Rechners geladen werden kann und Softwarecodeabschnitte umfasst, mit denen die Schritte gemäß einem der vorhergehenden Ansprüche durchgeführt werden, wenn das Produkt auf einem Rechner läuft.

15. Modulares technisches System, umfassend:
- ein Host-System (20), das zur Bereitstellung zumindest einer echtzeitfähigen virtuellen Maschine (26-1) ausgebildet ist; und
- zumindest ein Verarbeitungsmodul (10-i), das eine Hardwareeinheit (16) mit zumindest einem Sensor (17) und/oder einem Aktor (18) sowie eine Anschlusseinheit (11) mit einer Kommunikationskomponente (12) zur Ansteuerung der Hardwareeinheit (16) mittels Steuerbefehlen und einem Datenspeicher, in dem Konfigurationsdaten (KD) und ein Steuerprogramm (SP) zur Bereitstellung der Steuerbefehle gespeichert sind, umfasst, wobei das zumindest eine Verarbeitungsmodul (10-i) über seine Anschlusseinheit (11) mit dem Host-System (20) zum Austausch von Datentelegrammen gekoppelt ist;
wobei eine auf dem Host-System (20) laufende Verwaltungsinstanz zur Durchführung folgender Schritte ausgebildet ist:
a1) Auslesen der Konfigurationsdaten (KD) und des Steuerprogramms (SP) aus dem Datenspeicher;
b1) Instanziieren einer virtuellen Maschine (26-1) auf dem Host-Rechner (20);
c1) Laden der Konfigurationsdaten (KD) und des Steuerprogramms (SP) in die virtuelle Maschine (26-1) auf dem Host-Rechner (20);
und wobei das Host-System (20) zur Durchführung des folgenden Schritts ausgebildet ist:
d1) Ausführen der virtuellen Maschine (26-1) zur Bereitstellung zumindest der Steuerbefehle und Übertragen der Steuerbefehle an das zumindest eine Verarbeitungsmodul (10-i) zur Ansteuerung der Hardwareeinheit (16).

16. System nach Anspruch 15, ferner umfassend:
- ein Basis-System (30), das zumindest eine Anschlussschnittstelle mit zumindest einem Netzwerkanschluss und einem Versorgungsanschluss (31-i) zur Kopplung mit dem zumindest einen Verarbeitungsmodul (10-i) sowie ein Kopplungselement (33) zur Kopplung mit dem Host-System (20) umfasst, wobei die Verwaltungsinstanz (25) dazu ausgebildet ist, eine logische Verbindung über alle Netzwerkknoten auf einem Pfad zwischen der virtuellen Maschine (26-1) und der Anschlusseinheit (11) des Verarbeitungsmoduls (10-i) durchzuführen.

17. System nach Anspruch 15 oder 16, wobei die auf dem Host-System (20) laufende Verwaltungsinstanz (25) zur Durchführung folgender Schritte ausgebildet ist:
a2) Herbeiführen eines sicheren Zustands des zumindest einen Verarbeitungsmoduls (10-i);
b2) Beenden der dem zumindest einen Verarbeitungsmodul (10-i) zugeordneten virtuellen Maschine (26-1) und Entfernen von dem Host-System (20);
c2) Entfernen von gesetzten Netzwerkverbindungen.
